# FASCICULE DE BREVET EUROPEEN

(11) **EP 1 512 853 B1**
(45) Date de publication et mention de la délivrance du brevet: **05.09.2012**
(21) Numéro de dépôt: 04300486.0
(22) Date de dépôt: 28.07.2004
(51) Int. Cl.: F02B 29/04

(54) **Circuit pour l'alimentation d'un collecteur d'admission d'air d'un moteur thermique de véhicule automobile**
Zufuhrkreis für den Luftansaugkrümmer einer Fahrzeugbrennkraftmaschine
Supply circuit for air intake manifold collector of a vehicle combustion engine

(30) Priorité: 04.09.2003 FR 0310479
(43) Date de publication de la demande: 09.03.2005
(73) Titulaire: Renault s.a.s., 92100 Boulogne Billancourt (FR)
(72) Inventeur: Garcia, Carlos, 78170, La Celle Saint Cloud (FR)

(56) Documents cités:
- EP-A- 0 602 348
- DE-A1- 10 130 065
- US-A- 4 385 496
- US-A- 4 513 729
- US-A- 5 546 975

## Description

L'invention concerne un circuit pour l'alimentation d'un collecteur d'admission d'air d'un moteur thermique de véhicule automobile en air compressé fourni par un turbocompresseur.

L'invention concerne plus particulièrement un circuit pour l'alimentation d'un collecteur d'admission d'air d'un moteur thermique de véhicule automobile en air compressé fourni par un turbocompresseur, du type qui comporte au moins :
- une première branche, interposée entre le turbocompresseur et le collecteur, dans laquelle l'air circule à travers un échangeur air/air pour assurer le refroidissement de l'air circulant dans la dite première branche,
- une seconde branche, interposée entre le turbocompresseur et le collecteur, dans laquelle l'air circule directement à sa température de sortie du turbocompresseur,
et du type qui comporte un mélangeur, interposé entre les première et deuxième branches et le collecteur d'admission, qui est destiné à mélanger l'air en provenance des première et deuxième branches selon des proportions déterminées pour conférer une température déterminée à l'air admis dans le collecteur d'admission.

On connaît de nombreux exemples de circuits pour l'alimentation de collecteurs d'admission en air compressé issu d'un turbocompresseur.

De manière connue, l'alimentation du collecteur est réalisée de manière indépendante par la première branche et la seconde branche qui disposent chacune d'une vanne indépendante associée destinée à alimenter le conduit d'amission en air issu directement du turbocompresseur ou en air refroidi ayant circulé à travers un échangeur air/air plus connu sous le nom d'intercooler.

Chacune de ces vannes est conventionnellement commandée par un actionneur pneumatique indépendant associé, les actionneurs étant synchronisés inversement l'un par rapport à l'autre.

Un problème se pose quant à la synchronisation de ces actionneurs.

En effet, en cas de défaut de synchronisation des actionneurs, l'air qui est admis dans le collecteur d'admission peut ne pas être admis à la température souhaitée, ce qui peut perturber le fonctionnement du moteur.

En cas de défaillance simultanée des deux actionneurs, la circulation d'air peut être interrompue, provoquant ainsi l'arrêt du moteur.

Pour remédier à cet inconvénient, on a proposé une conception selon laquelle les deux vannés sont regroupées en un boîtier unique qui forme mélangeur et qui comporte deux papillons parallèles formant chacun une vanne et comportant un axe commun qui est mû en rotation par un actionneur pneumatique unique.

Cette conception pose des problèmes d'encombrement, les deux papillons parallèles nécessitant l'implantation dans le compartiment moteur du véhicule d'un boîtier de mélangeur relativement volumineux.

Pour remédier à cet inconvénient, le document US 4.385.496 a proposé un mélangeur du type décrit précédemment comportant deux papillons d'axes indépendants, montés dans des conduits d'axes parallèles et reliés par un dispositif d'accouplement provoquant la rotation d'un des axes partir d'un certain degré d'ouverture de l'autre axe.

Ce mélangeur n'est donc pas synchronisé suivant toute la course d'ouverture des papillons et de ce fait l'air qui est admis dans le collecteur d'admission peut ne as être admis à la température souhaitée, ce qui peut perturber à encore le fonctionnement du moteur. Ce dispositif à conduits parallèles est de plus particulièrement encombrant.

L'invention remédie à cet inconvénient en proposant un mélangeur dont les conduits d'axes sécants peuvent être obturés par des vannes à papillon commandées inversement l'une de l'autre par un moyen de commande commun.

Dans ce but, l'invention propose un circuit du type décrit précédemment, le mélangeur comportant un premier et un deuxième conduits d'axes sécants, destinés à être chacun relié à la première ou deuxième branche associée et se jetant dans un troisième conduit destiné à être relié au collecteur d'admission, et les premier et deuxième conduits comportant chacun à leur jonction avec le troisième conduit des moyens d'obturation progressive, caracterisé en ce que les moyens d'obturation progressive des premier et deuxième conduits sont synchronisés inversement l'un de l'autre et actionnés par un moyen de commande commun.

Selon d'autres caractéristiques de l'invention :
- chaque moyen d'obturation progressive de chaque premier/deuxième conduit comporte un papillon d'un diamètre égal à celui dudit conduit et monté à rotation autour d'un axe diamétral dudit conduit,
- les axes des papillons des premier et deuxième conduits traversent les premier et deuxième conduits et sont accouplés chacun à un palonnier associé, les palonniers des deux conduits étant reliés par une bielle commune permettant de conserver constante une position angulaire relative des papillons selon laquelle un papillon est fermé quand l'autre est ouvert, pour synchroniser les papillons inversement l'un de l'autre,
- le moyen de commande commun est constitué d'un moyen de commande pneumatique actionnant la bielle commune.
- le moyen de commande pneumatique comporte un boîtier à l'intérieur duquel une membrane délimite deux chambres de pression dont au moins une est susceptible d'être soumise à une pression variable pour actionner la membrane dont est solidaire une extrémité d'une tige dont l'autre extrémité, faisant saillie à l'extérieur du boîtier, est accouplée à la bielle,
- un des premier ou deuxième conduits est coaxial avec le troisième conduit et l'autre est perpendiculaire au troisième conduit.
- les papillons sont rappelés élastiquement vers une position dans laquelle le papillon du premier conduit est ouvert et dans laquelle le papillon du deuxième conduit est fermé.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un circuit d'admission d'air selon un premier état de la technique, comportant deux vannes indépendantes,
- la figure 2 est une vue en perspective d'un mélangeur à vannes groupées selon un état antérieur de la technique,
- la figure 3 est une vue en perspective d'un mélangeur à vannes groupées selon l'invention.

Dans la description qui va suivre, des lettres ou chiffres de référence identiques désignent des éléments identiques ou présentant des caractéristiques similaires.

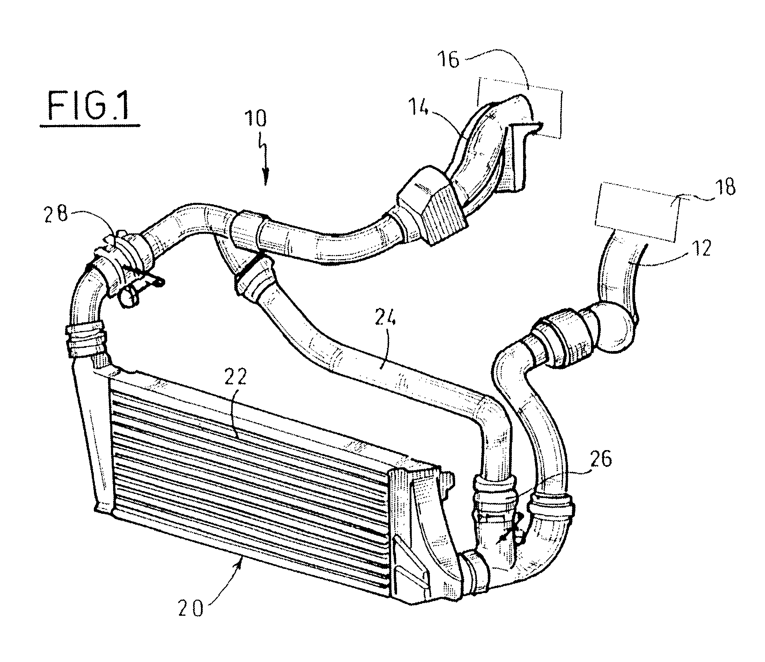

On a représenté à la figure 1 un circuit 10 pour l'alimentation d'un collecteur d'admission d'air d'un moteur thermique de véhicule automobile, représenté schématiquement par la référence 16, en air compressé fourni par un turbocompresseur représenté schématiquement par la référence 18.

De manière connue, le circuit 10 comporte une branche d'entrée ou conduit 12 qui est reliée à la sortie d'un collecteur du turbocompresseur 18 et une branche de sortie ou conduit 14 qui est reliée à l'entrée du collecteur 16 d'admission du moteur.

Le circuit 10 comporte aussi une première branche 20, interposée entre le turbocompresseur 18 et le collecteur 16, dans laquelle l'air circule à travers un échangeur air/air 22, pour assurer le refroidissement de l'air circulant dans la dite première branche 20, et une seconde branche 24, interposée entre le turbocompresseur 18 et le collecteur 16, dans laquelle l'air circule directement à sa température de sortie du turbocompresseur 18.

Selon cette première conception connue de l'état de la technique, le circuit 10 comporte un premier boîtier 26, interposé en amont de la deuxième branche 24, qui comporte un volet interne (non représenté) qui est susceptible d'obturer progressivement la deuxième branche 24 pour répartir la circulation d'air entre les deux branches 20 et 24. Le circuit comporte aussi un second boîtier 28, interposé en aval de la première branche 20, qui est susceptible d'obturer progressivement la première branche 20 pour répartir la circulation d'air entre les deux branches 20 et 24. Les deux boîtiers 26 et 28 sont synchronisés inversement l'un de l'autre en ouverture et fermeture, de sorte qu'un volet d'un boîtier 26, 28 est ouvert quand celui de l'autre boîtier est fermé, et réciproquement.

Cette conception pose un problème d'encombrement d'une part, et d'autre par la synchronisation des deux boîtiers par deux moyens de commande indépendants se révèle problématique, tant du point de vue de la fiabilité que de l'obtention d'une synchronisation efficace.

En particulier, si l'un des moyens de commande vient à être défaillant, l'air fourni au collecteur 16 d'admission peut ne pas être ajusté à la température requise, pénalisant ainsi le fonctionnement du moteur.

Pis encore, si les deux moyens de commande se révèlent défaillants, les deux boîtiers 26 et 28 peuvent obturer le circuit, privant ainsi le collecteur d'admission 16 d'air et interrompant le fonctionnement du moteur.

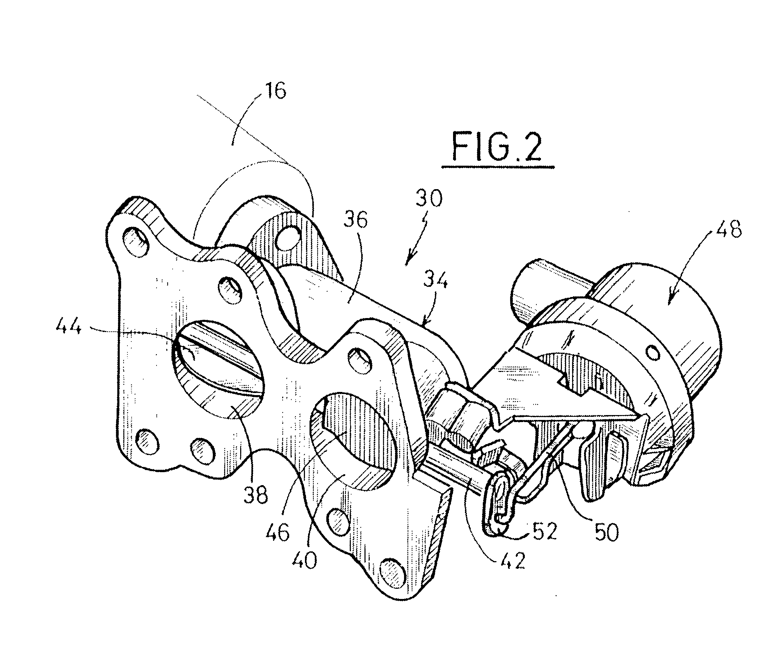

Pour remédier à cet inconvénient, comme l'illustre la figure 2, on a proposé un circuit du type du circuit 10 décrit précédemment, comportant un mélangeur 30, interposé entre les première et deuxième branches 20, 24 et le collecteur 16 d'admission.

Ce mélangeur 30 comporte un corps 34 comportant pour l'essentiel un conduit principal 36 qui est destiné à être relié au collecteur 16 d'admission. Ce conduit principal est percé de deux ouvertures 38 et 40 parallèles à l'intérieur desquelles sont montées autour d'un même axe 42 deux papillons 44 et 46 décalés angulairement de 90° l'un par rapport à l'autre. Chacune des ouvertures 38 ou 40 est reliée à une branche 20 ou 24 associée du circuit 10 comme représenté précédemment, de sorte que le débit d'air issu de la branche 20 est synchronisé inversement du débit d'air issu de la branche 24, ce qui permet de mélanger l'air en provenance des première et deuxième branches 20, 24 selon des proportions déterminées pour conférer une température déterminée à l'air admis dans le collecteur 16 d'admission.

Les deux papillons sont actionnés par un actionneur pneumatique unique 48 dont une tige 50 entraîne l'axe 42 par l'intermédiaire d'un palonnier 52.

Cette conception permet une synchronisation fiable des papillons 44 et 46, mais se révèle très encombrante.

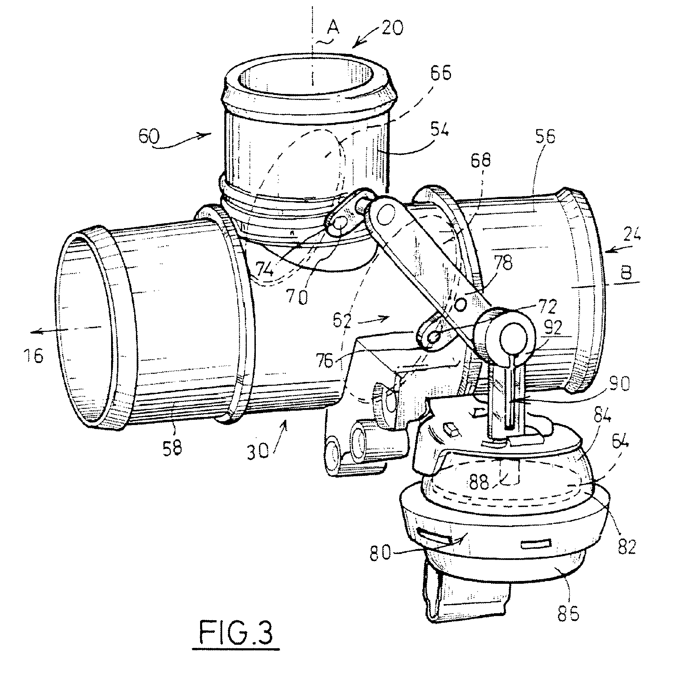

Pour remédier à cet inconvénient, l'invention propose un mélangeur 30 du type de celui qui a été représenté à la figure 3.

Conformément à l'invention, le mélangeur 30 selon l'invention comporte un premier conduit 54 et un deuxième 56 conduit d'axes "A" et "B" associés sécants, destinés à être chacun relié à la première ou deuxième branche 20, 24 associée et se jetant dans un troisième conduit 58 destiné à être relié au collecteur 16 d'admission.

Le premier conduit 54 et le deuxième conduit 56 comportent chacun à leur jonction avec le troisième conduit 58 des moyens associés 60, 62 d'obturation progressive, les moyens d'obturation progressive des premier et deuxième conduits 54, 56 étant synchronisés inversement l'un de l'autre et actionnés par un moyen 64 de commande commun.

Tout moyen d'obturation 60, 62 connu de l'état de la technique peut être utilisé pour la réalisation de l'invention. Toutefois, dans le mode de réalisation préféré de l'invention, chaque moyen 60, 62 d'obturation progressive de chaque premier/deuxième conduit comporte un papillon 66, 68 d'un diamètre égal à celui du conduit 54, 56 associé et monté à rotation autour d'un axe 70, 72 diamétral dudit conduit 54, 56.

Pour provoquer l'actionnement des papillons 66, 68, les axes 70, 72 des papillons 66, 68 des premier et deuxième conduits 54, 56 traversent les premier et deuxième conduits 54, 56 et sont accouplés chacun à un palonnier 74, 76 associé, les palonniers des deux conduits étant reliés par une bielle 78 commune permettant de conserver constante une position angulaire relative des papillons 66, 68 selon laquelle un papillon est fermé 66, 68 quand le papillon 68, 66 opposé est ouvert, pour synchroniser les papillons 66, 68 inversement l'un de l'autre.

Tout moyen 64 de commande connu de l'état de la technique peut convenir à l'actionnement des papillons 66, 68. Toutefois, dans le mode de réalisation préféré de l'invention, le moyen 64 de commande commun est constitué d'un moyen de commande pneumatique actionnant la bielle 78 commune.

Plus particulièrement, le moyen 64 de commande pneumatique comporte un boîtier 80 à l'intérieur duquel une membrane 82 délimite deux chambres 84 et 86 de pression opposées dont au moins une est susceptible d'être soumise à une pression variable pour actionner la membrane 82 dont est solidaire une extrémité 88 d'une tige 90 dont l'autre extrémité 92, faisant saillie à l'extérieur du boîtier 80, est accouplée à la bielle 78.

Cette conception d'assurer efficacement la synchronisation et la commande des papillons 66, 68.

Avantageusement, un des premier ou deuxième conduit 54, 56, par exemple ici le deuxième conduit 56 est coaxial avec le troisième conduit 58 et l'autre, ici le premier conduit 54 est perpendiculaire au troisième conduit 58.

Enfin, les papillons 66, 68 sont rappelés élastiquement vers une position dans laquelle le papillon 66 du premier conduit 54 associé à la première branche est ouvert et dans laquelle le papillon 68 du deuxième conduit 56 est fermé.

Cette configuration permet de garantir qu'en cas de défaillance du moyen 64 de commande pneumatique, le troisième conduit 58 alimente le collecteur 16 d'admission en air ayant traversé l'échangeur air/air, étant donné qu'en cas d'impossibilité de régulation de la température de l'air d'admission, il est préférable d'alimenter le moteur en air refroidi plutôt qu'en air chaud issu directement du collecteur du turbocompresseur 18.

A cet effet, le papillon 68 est par exemple rappelé vers sa position de fermeture par un ressort spiral (non représenté) et la liaison des papillons 66, 68 par la bielle 78 assure automatiquement le rappel du papillon 66 vers sa position d'ouverture.

Cette configuration n'est évidemment pas limitative de l'invention, et on pourrait envisager une configuration selon laquelle le papillon 66 est rappelé élastiquement vers sa position d'ouverture, ou une configuration dans laquelle les deux papillons 66, 68 rappelés élastiquement, le papillon 66 étant rappelé vers sa position d'ouverture et le papillon 68 étant rappelé vers sa position de fermeture, ou encore une configuration selon laquelle la bielle 78 est rappelée élastiquement dans une position d'ouverture du papillon 66.

L'invention permet de donc de réguler de manière simple et efficace la température de l'air admis dans un collecteur d'admission d'un moteur turbocompressé.

## Revendications

1. Circuit (10) pour l'alimentation d'un collecteur (16) d'admission d'air d'un moteur thermique de véhicule automobile en air compressé fourni par un turbocompresseur (18), du type qui comporte au moins :
- une première branche (20), interposée entre le turbocompresseur (18) et le collecteur (16), dans laquelle l'air circule à travers un échangeur air/air (22) pour assurer le refroidissement de l'air circulant dans la dite première branche (20),
- une seconde branche (24), interposée entre le turbocompresseur (18) et le collecteur (16), dans laquelle l'air circule directement à sa température de sortie du turbocompresseur (18), et du type qui comporte un mélangeur (30), interposé entre les première et deuxième branches (20, 24) et le collecteur (16) d'admission, qui est destiné à mélanger l'air en provenance des première et deuxième branches (20, 24) selon des proportions déterminées pour conférer une température déterminée à l'air admis dans le collecteur (16) d'admission, le mélangeur (30) comportant
- un premier et un deuxième conduits (54, 56) d'axes (A,B) sécants, destinés à être chacun relié à la première (20) ou deuxième branche (24) associée et se jetant dans un troisième conduit (58) destiné à être relié au collecteur (16) d'admission,
- et les premier et deuxième conduits (54, 56) comportant chacun à leur jonction avec le troisième conduit (58) des moyens (60, 62) d'obturation progressive,
**caractérisé en ce que** ces moyens d'obturation progressive comprennent des papillons (66, 68) qui sont synchronisés inversement l'un de l'autre et permettent de conserver constante une position angulaire relative des papillons (66, 68) et sont actionnés par un moyen (64) de commande commun selon laquelle un papillon (66, 68) est fermé quand l'autre papillon (66, 68) est ouvert.

2. Circuit (10) selon la revendication précédente, **caractérisé en ce que** les papillons (66, 68) ont un diamètre égal à celui de leur conduit (54, 56) et sont montés à rotation autour d'un axe (70, 72) diamétral de celui-ci.

3. Circuit (10) selon la revendication précédente, **caractérisé en ce que** les axes (70, 72) des papillons (66, 68) des premier et deuxième conduits (54, 56) traversent les premier et deuxième conduits (54, 56) et sont accouplés chacun à un palonnier (74, 76) associé, les palonniers (74, 76) des deux conduits (54, 56) étant reliés par une bielle (78) commune permettant de conserver constante une position angulaire relative des papillons (66, 68).

4. Circuit (10) selon la revendication précédente, **caractérisé en ce que** le moyen (64) de commande commun est constitué d'un moyen de commande pneumatique actionnant la bielle commune.

5. Circuit selon la revendication précédente, **caractérisé en ce que** le moyen (64) de commande pneumatique comporte un boîtier (80) à l'intérieur duquel une membrane (82) délimite deux chambres (84, 86) de pression dont au moins une est susceptible d'être soumise à une pression variable pour actionner la membrane (82) dont est solidaire une extrémité (88) d'une tige (90) dont l'autre extrémité (93), faisant saillie à l'extérieur du boîtier (80), est accouplée à la bielle (78).

6. Circuit selon l'une quelconque des revendications 1 à 5, **caractérisé en ce que** un des premier ou deuxième conduit (54, 56) est coaxial avec le troisième conduit (58) et **en ce que** l'autre est perpendiculaire au troisième conduit (58).

7. Circuit selon l'une quelconque des revendications 2 à 6, **caractérisé en ce que** les papillons (66, 68) sont rappelés élastiquement vers une position dans laquelle le papillon (66) du premier conduit (54) est ouvert et dans laquelle le papillon (68) du deuxième conduit (56) est fermé.

## Claims

1. Circuit (10) for supplying an air intake manifold (16) of a motor vehicle combustion engine with compressed air supplied by a turbocompressor (18), of the type which comprises at least:
- a first branch (20), interposed between the turbocompressor (18) and the manifold (16), in which branch the air flows through an air/air exchanger (22) to cool the air flowing through the said first branch (20),
- a second branch (24), interposed between the turbocompressor (18) and the manifold (16), in which branch the air flows directly at the temperature at which it leaves the turbocompressor (18), and of the type which comprises a mixer (30), interposed between the first and second branches (20, 24) and the intake manifold (16), which mixer is intended to mix the air from the first and second branches (20, 24) in determined proportions in order to confer a determined temperature upon the air admitted to the intake manifold (16), the mixer (30) comprising
- first and second pipes (54, 56) the axes (A, B) of which are secant, which are intended each to be connected to the associated first (20) or second (24) branch and which discharge into a third pipe (58) intended to be connected to the intake manifold (16),
- and the first and second pipes (54, 56) each comprising, where they join the third pipe (58), progressive shut-off means (60, 62),
**characterized in that**
- these progressive shut-off means comprise butterflies (66, 68) which are inversely synchronized with one another and allow a relative angular position of the butterflies (66, 68) to be kept constant, and are actuated by a common control means (64) whereby one butterfly (66, 68) is closed when the other butterfly (66, 68) is opened.

2. Circuit (10) according to the preceding claim, **characterized in that** the butterflies (66, 68) have a diameter equal to that of their pipe (54, 56) and are mounted to rotate about a diametral spindle (70, 72) thereof.

3. Circuit (10) according to the preceding claim, **characterized in that** the spindles (70, 72) of the butterflies (66, 68) of the first and second pipes (54, 56) pass across the first and second pipes (54, 56) and are each coupled to an associated yoke (74, 76), the yokes (74, 76) of the two pipes (54, 56) being connected via a common connecting rod (78) that allows a relative angular position of the butterflies (66, 68) to be kept constant.

4. Circuit (10) according to the preceding claim, **characterized in that** the common control means (64) consists of a pneumatic control means operating the common connecting rod.

5. Circuit according to the preceding claim, **characterized in that** the pneumatic control means (64) comprises a unit (80) within which a membrane (82) delimits two pressure chambers (84, 86) at least one of which can be subjected to a variable pressure in order to operate the membrane (82) to which is secured one end (88) of a rod (90) of which the other end (93), which projects out from the unit (80), is coupled to the connecting rod (78).

6. Circuit according to any one of Claims 1 to 5, **characterized in that** of the first and second pipes (54, 56), one is coaxial with the third pipe (58) and **in that** the other is perpendicular to the third pipe (58).

7. Circuit according to any one of Claims 2 to 6, **characterized in that** the butterflies (66, 68) are elastically returned towards a position in which the butterfly (66) of the first pipe (54) is open and in which the butterfly (68) of the second pipe (56) is closed.

## Patentansprüche

1. Kreislauf (10) zur Versorgung eines Luftansaugkrümmers (16) eines Verbrennungsmotors eines Kraftfahrzeugs mit Druckluft, die von einem Turbolader (18) geliefert wird, von der Art, die mindestens aufweist:
- einen ersten Zweig (20), der zwischen den Turbolader (18) und den Krümmer (16) eingefügt ist, in dem die Luft durch einen Luft/Luft-Wärmetauscher (22) fließt, um die Kühlung der im ersten Zweig (20) fließenden Luft zu gewährleisten,
- einen zweiten Zweig (24), der zwischen den Turbolader (18) und den Krümmer (16) eingefügt ist, in dem die Luft direkt auf ihrer Ausgangstemperatur aus dem Turbolader (18) fließt, und von der Art, die einen zwischen den ersten und den zweiten Zweig (20, 24) und den Ansaugkrümmer (16) eingefügten Mischer (30) aufweist, der dazu bestimmt ist, die vom ersten und zweiten Zweig (20, 24) kommende Luft gemäß bestimmten Anteilen zu mischen, um der in den Ansaugkrümmer (16) angesaugten Luft eine bestimmte Temperatur zu verleihen, wobei der Mischer (30) aufweist
- einen ersten und einen zweiten Kanal (54, 56) mit sich schneidenden Achsen (A, B), die dazu bestimmt sind, jeder mit dem zugeordneten ersten (20) oder zweiten Zweig (24) verbunden zu werden und in einen dritten Kanal (58) münden, der dazu bestimmt ist, mit dem Ansaugkrümmer (16) verbunden zu werden,
- und der erste und der zweite Kanal (54, 56) je an ihrer Verbindung mit dem dritten Kanal (58) Einrichtungen (60, 62) zum progressiven Verschluss aufweisen,
**dadurch gekennzeichnet, dass**
- diese Einrichtungen zum progressiven Verschluss Drosselklappen (66, 68) enthalten, die umgekehrt zueinander synchronisiert sind und es ermöglichen, eine relative Winkelstellung der Drosselklappen (66, 68) konstant zu halten, und von einer gemeinsamen Steuereinrichtung (64) betätigt werden, gemäß der eine Drosselklappe (66, 68) geschlossen ist, wenn die andere Drosselklappe (66, 68) offen ist.

2. Kreislauf (10) nach dem vorhergehenden Anspruch, **dadurch gekennzeichnet, dass** die Drosselklappen (66, 68) einen Durchmesser gleich demjenigen ihres Kanals (54, 56) haben und um eine diametrale Achse (70, 72) von diesem drehbar montiert sind.

3. Kreislauf (10) nach dem vorhergehenden Anspruch, **dadurch gekennzeichnet, dass** die Achsen (70, 72) der Drosselklappen (66, 68) des ersten und zweiten Kanals (54, 56) den ersten und zweiten Kanal (54, 56) durchqueren und je mit einem zugeordneten Schwinghebel (74, 76) gekoppelt sind, wobei die Schwinghebel (74, 76) der zwei Kanäle (54, 56) durch eine gemeinsame Schubstange (78) verbunden sind, die es ermöglicht, eine relative Winkelstellung der Drosselklappen (66, 68) konstant zu halten.

4. Kreislauf (10) nach dem vorhergehenden Anspruch, **dadurch gekennzeichnet, dass** die gemeinsame Steuereinrichtung (64) aus einer pneumatischen Steuereinrichtung besteht, die die gemeinsame Schubstange betätigt.

5. Kreislauf nach dem vorhergehenden Anspruch, **dadurch gekennzeichnet, dass** die pneumatische Steuereinrichtung (64) ein Gehäuse (80) aufweist, in dessen Innerem eine Membran (82) zwei Druckkammern (84, 86) begrenzt, von denen mindestens eine einem variablen Druck ausgesetzt sein kann, um die Membran (82) zu betätigen, mit der ein Ende (88) einer Stange (90) fest verbunden ist, deren anderes Ende (93), das aus dem Gehäuse (80) vorsteht, mit der Schubstange (78) gekoppelt ist.

6. Kreislauf nach einem der Ansprüche 1 bis 5, **dadurch gekennzeichnet, dass** einer, der erste oder der zweite Kanal (54, 56), mit dem dritten Kanal (58) koaxial ist, und dass der andere zum dritten Kanal (58) lotrecht ist.

7. Kreislauf nach einem der Ansprüche 2 bis 6, **dadurch gekennzeichnet, dass** die Drosselklappen (66, 68) elastisch in eine Stellung zurückgeholt werden, in der die Drosselklappe (66) des ersten Kanals (54) offen und die Drosselklappe (68) des zweiten Kanals (56) geschlossen ist.
